# FASCICULE DE BREVET EUROPEEN

(11) **EP 1 756 613 B1**
(45) Date de publication et mention de la délivrance du brevet: **10.04.2013**
(21) Numéro de dépôt: 05766560.6
(22) Date de dépôt: 24.05.2005
(51) Int. Cl.: G01S 5/00

(54) **LOCALISATION DE STATION MOBILE DANS UN RESEAU LOCAL SANS FIL**
ORTUNG EINER MOBILEN STATION IN EINEM WLAN
LOCATING A MOBILE STATION IN A WIRELESS LOCAL AREA NETWORK

(30) Priorité: 17.06.2004 FR 0406689
(43) Date de publication de la demande: 28.02.2007
(73) Titulaire: FRANCE TELECOM, 75015 Paris (FR)
(72) Inventeur: VILLEY, Jean-Christian, F-22560 Pleumer Bodou (FR); RIVOALEN, Mathieu, F-29200 Brest (FR)
(74) Mandataire: Regimbeau
(86) Numéro de dépôt international: PCT/FR2005/050357
(87) Numéro de publication internationale: WO 2006/003335

(56) Documents cités:
- WO-A1-03/086000
- WO-A1-2004/008795
- US-A1- 2004 095 276
- US-B2- 6 674 403
- BAHL P ET AL: "A software system for locating mobile users: design, evaluation and lessons" MICROSOFT RESEARCH, avril 2000 (2000-04), XP002967193
- BAHL P ET AL: "RADAR: an in-building RF-based user location and tracking system" INFOCOM 2000. NINETEENTH ANNUAL JOINT CONFERENCE OF THE IEEE COMPUTER AND COMMUNICATIONS SOCIETIES. PROCEEDINGS. IEEE TEL AVIV, ISRAEL 26-30 MARCH 2000, PISCATAWAY, NJ, USA,IEEE, US, vol. 2, 26 mars 2000 (2000-03-26), pages 775-784, XP010376167 ISBN: 0-7803-5880-5
- BAHL P ET AL: "User location and tracking in an in-building radio network" février 1999 (1999-02), TECHNICAL REPORT MSR-TR-99-12, XX, XX, PAGE(S) 1-12 , XP002967194 alinéas [4.1.5], [05.1]
- MEUNIER J-L: "Peer-to-peer determination of proximity using wireless network data" IEEE, 14 mars 2004 (2004-03-14), pages 70-75, XP010689731

## Description

La présente invention concerne la localisation d'une station mobile dans des zones spatiales, telles qu'un ensemble de pièces sur un étage ou plusieurs étages d'un immeuble, où est installé un réseau local sans fil cellulaire dont les points d'accès ont une faible portée. Typiquement, le réseau local sans fil satisfait au label WiFi (Wireless Fidelity) et à la norme 802.11a, 802.11b ou 802.11g.

Pour localiser une station mobile précisément dans un ensemble de zones spatiales relativement closes tel que des pièces, il n'est pas possible de se baser sur des modélisations d'atténuation de signaux, comme dans un milieu de propagation ouvert où sont déplacés des terminaux mobiles du type GSM. En effet, particulièrement les cloisons à l'intérieur de bâtiments, mais également les meubles et les ouvertures telles que portes et fenêtres des pièces, constituent des obstacles à une modélisation de la propagation de signaux radio dans un bâtiment sous forme de logiciel. En outre, les modélisations connues en espace libre sont très sensibles aux variations climatiques, aux effets de foule, et donc aux nombres de personnes plus ou moins variables dans les pièces, et aux pertes de signal.

La demande de brevet US 2004/0095276 divulgue une localisation d'un émetteur mobile communiquant avec des récepteurs fixes dans un espace prédéterminé composé de pièces d'un bâtiment. Au cours d'une phase de calibrage sont définis des noeuds prédéterminés où l'émetteur est le plus susceptible de se trouver suivant des chemins prédéterminés. Les récepteurs mesurent des puissances relatives à un même signal émis par l'émetteur situé à un noeud prédéterminé afin de former un vecteur de calibrage de puissance de signal ayant autant de composantes de puissance que de récepteurs et assigné au noeud. Au cours d'une phase de localisation, un vecteur de puissance de signal pour un émetteur mobile porté par une personne est généré et comparé à tous les vecteurs de calibrage générés pendant la phase de calibrage afin de déterminer le vecteur de calibrage le plus vraisemblable ayant la distance euclidienne minimale par rapport au vecteur de l'émetteur porté. L'émetteur porté est alors considéré comme localisé au noeud auquel est assigné le vecteur de calibrage de puissance de signal le plus vraisemblable. Cette localisation d'émetteur par rapport à des points, en tant que noeuds, ne situe pas précisément l'émetteur dans une zone spatiale, telle qu'une pièce, et requiert de nombreuses comparaisons du vecteur de puissance pour l'émetteur à tous les vecteurs de calibrage générés pendant la phase de calibrage.

**L'objectif** principal de l'invention est de localiser plus rapidement et précisément à deux ou trois mètres près une station mobile liée à un réseau local sans fil dans des zones spatiales délimitées préalablement.

Enfin, l'invention se rapporte à un programme d'ordinateur apte à être mis en oeuvre dans le serveur selon l'invention. Le programme comprend des instructions qui, lorsque le programme est chargé et exécuté dans ledit serveur, réalisent les étapes du sommets des zones spatiales, comme des coins de pièces, selon une première réalisation, que lorsque les extrémités de segments qui mesurent des puissances de réception de référence sont les points d'accès du réseau local selon une deuxième réalisation. De même, les puissances de réception courantes peuvent être mesurées par une station mobile, ou bien respectivement par les points d'accès du réseau local, en tant que ledit un des éléments.

La localisation de la station mobile dans l'une des zones spatiales peut être enregistrée dans un serveur de localisation de stations mobiles susceptible d'être interrogé par un serveur d'application ou directement via un serveur web.

Selon une caractéristique de l'invention relative à une correction en mode différentiel, pour réduire l'influence des variations globales des mesures de puissances liées par exemple aux conditions météorologiques, des capacités particulières de la station mobile ou de l'exposition de cette station par exemple enfouie dans une poche en vue, il est prévu un étalonnage des puissances de réception de référence à une valeur arbitraire pour le point d'accès associé aux puissances de réception les plus élevées en moyenne et une correction des puissances de réception de référence associées à chaque point caractéristique de chaque zone spatiale en leur appliquant le même décalage qu'à la puissance de réception maximale afin de déterminer dans l'hyperespace les hyperzones associées aux zones spatiales en fonction des puissances de réception de référence corrigées.

L'invention concerne également un serveur pour localiser une station mobile dans un réseau local

Pour attendre cet objectif, l'invention propose un procédé selon la revendication 1.

Comme on le verra dans la suite de la description, le procédé de l'invention s'applique aussi bien lorsque les extrémités de segments qui mesurent des puissances de réception de référence sont situées aux points caractéristiques tels que des procédé de localisation de station mobile selon l'invention.

D'autres caractéristiques et avantages de la présente invention apparaîtront plus clairement à la lecture de la description suivante de plusieurs réalisations préférées de l'invention, à titre d'exemples non limitatifs, en référence aux **dessins** annexés correspondants dans lesquels :
- la figure 1 est un bloc-diagramme schématique d'un réseau local sans fil cellulaire situé dans un espace de localisation de zones spatiales où une station mobile est à localiser selon l'invention ;
- la figure 2 est un algorithme des étapes principales ainsi que d'étapes complémentaires du procédé de localisation de la station mobile selon l'invention ;
- la figure 3 est un diagramme dans un hyperespace à trois dimensions montrant des hyperzones respectivement associées aux zones spatiales ; et
- la figure 4 est un algorithme d'une étape de localisation vers la fin du procédé de l'invention.

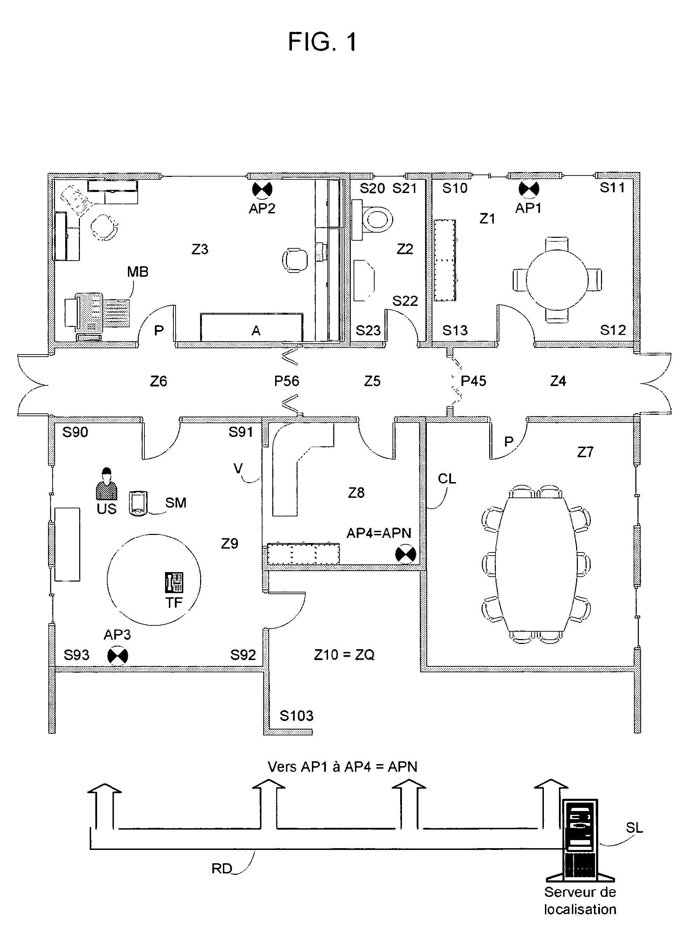

En référence à la figure 1, un **réseau local** sans fil cellulaire est accessible à des stations mobiles SM se trouvant dans un ensemble de zones spatiales. L'ensemble des zones spatiales peut être un immeuble de bureaux, ou un plateau ou une partie de plateau dans un immeuble appartenant à une entreprise. Selon l'exemple montré à la figure 1, les zones spatiales sont Q = 10 zones Z1 à Z10 = ZQ réparties sur un plateau et ayant des formes polygonales, bien souvent parallélépipédiques. Par exemple les zones Z4, Z5 et Z6 communiquent par des portes P45 et P56 le long d'un couloir, les zones Z3, Z8 et Z9 sont des bureaux, les zones Z1 et Z7 sont des salles de réunion, et la zone Z2 est destinée aux toilettes.

Chaque zone spatiale Zq, avec l'indice q tel que 1 ≤ q ≤ Q, est délimitée en général par des cloisons, un plancher et un plafond et présente des sommets, par exemple huit sommets pour une zone parallélépipédique. Afin de ne pas surcharger la figure 1, on a seulement indiqué les quatre sommets S10 à S13, S20 à S23 et S90 à S93 des trois zones parallélépipédiques Z1, Z2 et Z9 au niveau du plancher.

Le réseau local sans fil comprend plusieurs points d'accès (Access Point), parfois appelés bornes sans fil, et des stations mobiles SM, appelées également terminaux mobiles. Par exemple, le réseau sans fil montré à la figure 1 comporte N = 4 points d'accès AP1 à AP4 = APN installés respectivement dans les zones Z1, Z3, Z9 et Z8.

Les points d'accès et les stations mobiles comportent des interfaces d'accès et de communication selon la norme IEEE 802.11a, 802.11b ou 802.11g, et satisfont le label WiFi (Wireless Fidelity). Le réseau sans fil est cellulaire en ce sens que chaque point d'accès APn, avec l'indice n tel que 1 ≤ n ≤ N, joue le rôle d'une station de base pour un ensemble de services de base BSS (Basic Set Service) offert aux stations mobiles situées dans la couverture du point d'accès. Les points d'accès AP1 à APN sont reliés entre eux par un réseau de bus de distribution RD par l'intermédiaire duquel les points d'accès échangent des paquets à haut débit, par exemple comme dans un réseau Ethernet. Le réseau de distribution RD permet à une station mobile SM d'échanger des paquets avec d'autres stations mobiles couvertes par un ou plusieurs points d'accès et avec des terminaux mobiles et fixes éloignés à travers notamment des réseaux de communications de paquets à haut débit tel que l'internet.

Une station mobile SM est par exemple un assistant personnel numérique communicant PDA, un ordinateur portable, une machine de bureau ou un périphérique transportable. Dans le cadre de la présente invention, on suppose qu'une station mobile SM à localiser est portable, comme un assistant PDA, par un usager US susceptible de se déplacer dans l'ensemble des zones spatiales Z1 à ZQ.

Le réseau local sans fil comprend également un serveur de localisation SL qui comprend notamment un programme pour exécuter des étapes du procédé de localisation selon l'invention. Une base de données incorporée ou non dans le serveur de localisation enregistre des résultats de mesure de puissances de réception de référence dans les zones spatiales Z1 à ZQ relativement à tous les points d'accès AP1 à APN pour localiser des stations mobiles, des identificateurs des stations mobiles en association à des identificateurs de zones spatiales où les stations mobiles ont été et sont localisées et à des puissances de réception courantes, ainsi qu'en association à l'identificateur de chaque zone spatiale un ensemble d'identificateurs de zones voisines communiquant avec la zone spatiale, comme on le verra ci-après.

En variante, toute autre grandeur physique, telle qu'amplitude de signal reçu, est considérée comme équivalente à une puissance de réception dans le cadre de l'invention.

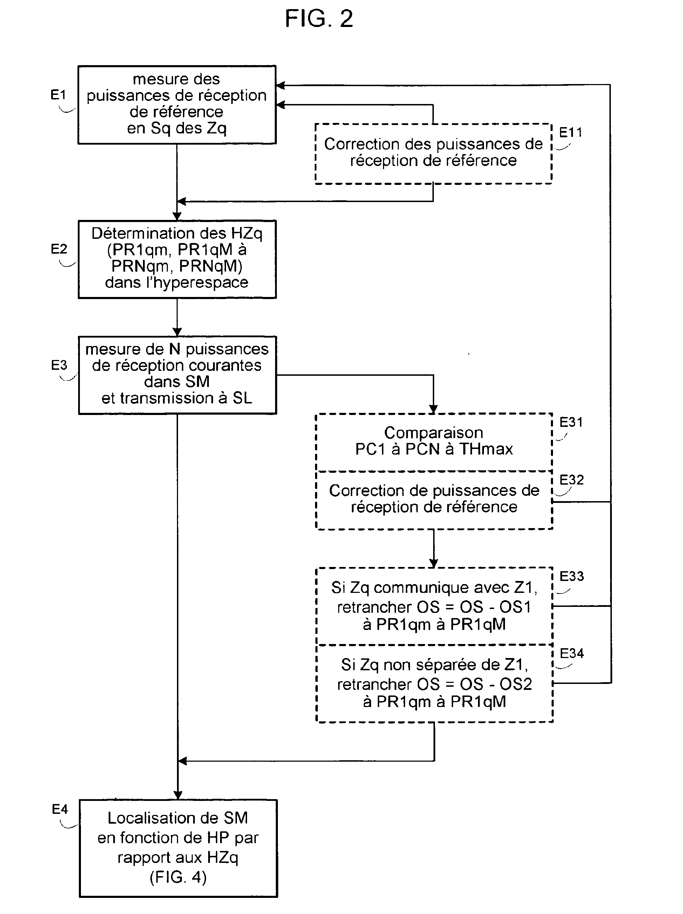

Le **procédé de localisation** d'une station mobile SM dans le réseau local sans fil cellulaire comprend principalement quatre étapes E1 à E4, comme montré à la figure 2. Il est destiné à localiser un usager US porteur d'une station mobile SM dans les zones spatiales Z1 à ZQ afin par exemple de faire sonner un téléphone fixe TF dans la zone où l'usager se trouve pour qu'il prenne un appel téléphonique. Deux étapes préalables E1 et E2 sont relatives à une mesure de puissances de réception en des points caractéristiques de chacune des zones Z1 à ZQ et à une détermination d'hyperzones de puissance HZ1 à HZQ correspondant à ces zones dans un repère à N coordonnées de puissance. Les deux autres étapes E3 et E4 sont relatives à une mesure de N puissances de réception dans la station mobile SM à localiser et à un positionnement d'un hyperpoint ayant pour coordonnées les N puissances de réception mesurées dans le repère à N dimensions pour en déduire une hyperzone contenant l'hyperpoint et ainsi la zone spatiale où la station mobile SM est localisée.

**L'étape** de mesure de puissance **E1** consiste essentiellement en une cartographie radio de l'espace constitué par les zones Z1 à ZQ où est susceptible d'être localisée la station mobile SM. Cette cartographie radio est nécessaire particulièrement dans la bande de fréquence en 802.11b/g comprise entre 2,40 GHz et 2,48 GHz qui est découpée en 14 canaux séparés de 5 MHz dont certains au moins sont utilisables dans un pays.

Une modélisation mathématique des mécanismes de propagation des ondes est beaucoup trop complexe dans un espace formé par des zones spatiales Z1 à ZQ telles que pièces dont les cloisons et les contenus varient fréquemment d'une pièce à l'autre, ce qui empêche d'extrapoler une cartographie radio à partir de simple données topologiques telles qu'un plan et les emplacements des points d'accès AP1 à APN sur celui-ci. En effet, des mesures de puissance de réception à l'intérieur des pièces par rapport à des emplacements prédéterminés des points d'accès ne permettent pas de trouver une relation simple liant la puissance de réception reçue en un point quelconque et les distances réelles de ce point quelconque aux points d'accès du réseau à travers les différentes pièces. On constate naturellement une tendance décroissante de la puissance de réception lorsque la distance augmente entre le point de mesure de puissance de réception et les points d'accès. Cependant d'une part, la non-linéarité de la relation entre la distance à l'émetteur et la puissance de réception implique qu'une même différence entre deux puissances de réception ne donne pas la même différence en terme de distance réelle. D'autre part, la propagation des ondes est sujette aux diverses atténuations observées dans les recoins des pièces et dans les matériaux rencontrés dans les pièces, tels qu'une cloison CL, une porte plus ou moins fermée P, une vitre V, une machine de bureau MB et une armoire A. En outre des phénomènes d'écho et d'ondes stationnaires peuvent même induire très localement une croissance de la puissance du signal reçu en s'éloignant de l'émetteur. A cause de toutes ces raisons, un modèle de propagation des ondes fiable ne peut être extrapolé en fonction de mesures de puissances de réception.

Selon l'invention, des puissances de réception sont mesurées en des points caractéristiques de chacune des zones Z1 à ZQ de l'espace de localisation. L'invention ne recherche pas les coordonnées précises de la station mobile SM de l'usager US dans l'espace de localisation, mais plutôt une zone spatiale dont les limites sont prédéfinies et où la station mobile est susceptible d'être localisée.

Chaque zone Zq de l'espace de localisation est typiquement une pièce ou une portion de pièce et est en général polyédrique. Les points caractéristiques Sq où sont mesurées les puissances de réception sont par exemple des sommets de la zone. Par exemple dans la figure 1, les quatre sommets S10 à S13, S20 à S23 et S90 à S93 situés sur le plancher ou au plafond constituent des points caractéristiques des zones Z1, Z2 et Z9. D'autres points caractéristiques de la zone peuvent être également choisis, particulièrement sur le pourtour de celle-ci, comme par exemple au milieu d'une cloison et au centre d'une pièce, ou devant un bureau ou une table où l'usager de la station mobile SM est plus apte à y demeurer plus longtemps, ou bien encore près d'un point d'accès qui se trouve dans la zone.

En chaque point caractéristique Sq de chaque zone Zq, une station de base de référence mesure des puissances de réception de référence pour des signaux émis avec une puissance d'émission prédéterminée, telle qu'une puissance d'émission de fonctionnement nominal, depuis les N points d'accès AP1 à APN du réseau local sans fil. Par exemple, pour quatre points d'accès AP1 à AP4 = APN, et pour quatre points caractéristiques confondus avec des sommets des zones Z1 et Z2, le tableau I suivant indique les puissances de réception de référence mesurées exprimées en dBm:

| Sommet | zone q | AP1 | AP2 | AP3 | AP4 |
|---|---|---|---|---|---|
| 0 | 1 | - 46 | - 89 | - 84 | - 83 |
| 1 | 1 | - 47 | - 91 | - 83 | - 77 |
| 2 | 1 | - 51 | - 94 | - 84 | - 83 |
| 3 | 1 | - 50 | - 84 | - 78 | - 74 |
| 0 | 2 | - 64 | - 79 | - 80 | - 81 |
| 1 | 2 | - 57 | - 79 | - 82 | - 79 |
| 2 | 2 | - 67 | - 82 | - 86 | - 83 |
| 3 | 2 | - 67 | - 73 | - 75 | - 69 |

Pour chaque point d'accès APn et dans chaque zone spatiale Zq, on ne conserve que les valeurs des puissances de réception de référence mesurées minimale et maximale PRnqm et PRnqM, comme indiqué dans le tableau suivant II:

| Zone q | n | AP1 | AP2 | AP3 | AP4 |
|---|---|---|---|---|---|
| 1 | min | - 51 | - 94 | - 84 | - 83 |
| 1 | max | - 46 | - 84 | - 78 | - 74 |
| 2 | min | - 67 | - 82 | - 86 | - 83 |
| 2 | max | - 57 | - 73 | - 75 | - 69 |

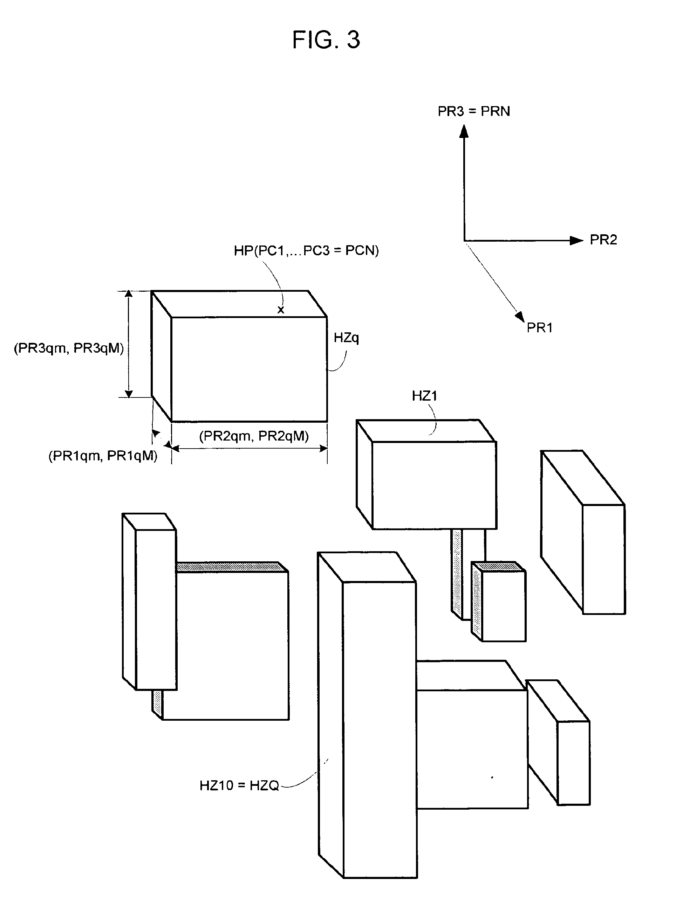

Dans un hyperespace à N dimensions ayant pour coordonnées les puissances de réception de référence respectivement associées au N points d'accès du réseau, le serveur SL détermine à **l'étape E2**, pour la zone spatiale Zq, une hyperzone de puissance HZq qui est limitée respectivement par les puissances de réception de référence minimales et maximales PRlqm, PRlqM à PRNqm, PRNqM aux points caractéristiques Sq de la zone spatiale Zq. Dans le cas simple d'un hyperespace à trois dimensions correspondant à des valeurs de puissance PR1, PR2 et PR3 de trois points d'accès AP1, AP2 et AP3, chaque hyperzone a la forme d'un pavé HZq limité respectivement par des puissances de réception de référence mesurées minimales et maximales PRlqm et PR1qM, PR2qm et PR2qM, et PR3qm et PR3qM, comme montré à la figure 3.

Après cette détermination des hyperzones de puissance HZ1 à HZQ respectivement associées aux zones spatiales Z1 à ZQ de l'espace où peut être localisée la station mobile SM, on considère que le service de localisation selon l'invention est activé et que le serveur de localisation SL a enregistré dans sa base de données toutes les puissances de réception de PR11m, PR11M à PRNQm, PRNQM minimales et maximales délimitant toutes les hyperzones HZ1 à HZQ, respectivement en association avec les identificateurs des zones spatiales Z1 à ZQ.

A **l'étape E3**, la station mobile SM mesure N puissances de réception courantes PC1 à PCN correspondant à des puissances d'émission identiques depuis les N points d'accès AP1 à APN du réseau local. Par exemple, la station mobile mesure la puissance de réception courante relative à un point d'accès chaque fois qu'il reçoit la trame balise du point d'accès que celui-ci émet toutes les 0,1 seconde environ. Si la station mobile est sous la couverture radio du point d'accès, c'est-à-dire si la puissance de réception courante est supérieure à un seuil de puissance de réception minimum prédéterminé en deçà duquel la station mobile SM ne peut plus reconnaître les trames, la valeur de la puissance de réception courante est transmise dans la trame de réponse à la trame balise par la station mobile vers le point d'accès qui la retransmet en association avec son adresse de point d'accès au serveur de localisation SL. Le seuil de puissance de réception minimum est par exemple égal à -94 dBm et correspond à la limite de portée de propagation de signaux émis par un point d'accès. En revanche, le serveur de localisation SL considère comme nulle toute puissance de réception courante inférieure au seuil de puissance de réception minimum prédéterminé et non transmise par la station mobile.

Le serveur de localisation SL possède alors les coordonnées d'un hyperpoint HP dans l'hyperespace de puissance défini préalablement, qui sont égales aux valeurs des puissances de réception courantes PC1 à PCN transmises par la station mobile respectivement aux points d'accès AP1 à APN et centralisées dans le serveur de localisation. Lorsque l'hyperpoint HP appartient à une hyperzone de puissance HZq (figure 3) qui a été déterminée pour une zone spatiale respective Zq, alors le serveur de localisation déduit que la station mobile SM est localisée dans la zone spatiale Zq, à **l'étape E4**.

Le procédé de localisation selon l'invention reposant sur une approche heuristique, deux cas particuliers peuvent se produire relativement à la localisation de l'hyperpoint HP dont les coordonnées sont les N puissances de réception courantes PC1 à PCN mesurées par la station mobile: dans aucune des hyperzones préalablement déterminées HZ1 à HZQ, ou au contraire à l'intersection d'au moins deux hyperzones ou plus généralement de plusieurs hyperzones.

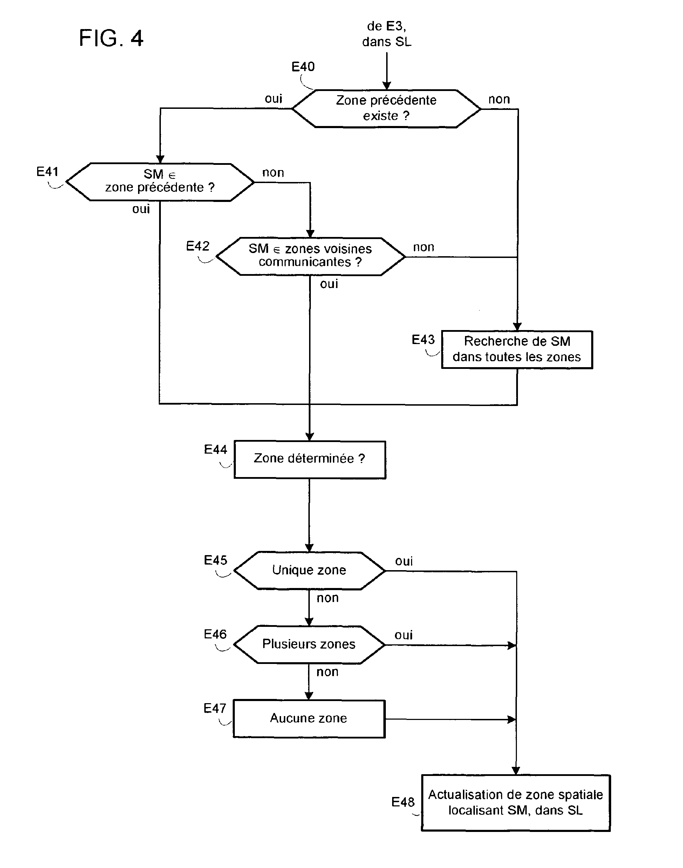

En référence à la figure 4, **l'étape de localisation de station mobile E4** exécutée dans le serveur de localisation SL comprend tout d'abord des étapes E40 à E43 afin de limiter la durée de recherche de la zone spatiale où la station mobile SM se trouve, dans le serveur de localisation SL et de résoudre directement certains cas de conflits de localisation liés à l'appartenance de l'hyperpoint HP à plusieurs hyperzones.

A l'étape E40, le serveur SL vérifie que sa base de données a enregistré en association avec l'identificateur de la station mobile SM un identificateur d'une zone spatiale où la station mobile se trouvait précédemment à la présente localisation courante. Si c'est le cas, l'hyperpoint HP ayant pour coordonnées les puissances de réception courantes PC1 à PCN est recherché à l'étape E41 dans une première hyperzone correspondant à la zone spatiale où le terminal se trouvait précédemment à la localisation courante. Si l'hyperpoint HP appartient à cette première hyperzone, le procédé continue à l'étape E44.

Dans le cas contraire, l'hyperpoint HP est recherché à l'étape E42 dans des hyperzones correspondant aux zones spatiales communiquant avec la zone spatiale précédente où se trouvait la station mobile SM. Par exemple, en référence à la figure 1, si la station mobile SM se trouvait précédemment dans la zone Z5, les zones voisines communiquant avec celle-ci sont les zones de couloir Z4 et Z6, la zone de toilettes Z2 et la zone de bureau Z8. Selon un deuxième exemple, si l'usager se trouvait précédemment dans la zone Z3 ne communiquant qu'avec la zone Z6, seule la zone Z6 est considérée à l'étape E42, bien que les zones Z2 et Z5 soient voisines de la zone Z3. Si à l'étape E42, l'hyperpoint HP est localisé dans l'une des hyperzones correspondant aux zones spatiales communiquant avec la zone spatiale précédente, le procédé passe à l'étape E44.

Sinon l'hyperpoint HP est finalement recherché dans toutes les hyperzones restantes préalablement déterminées pour l'espace de recherche de localisation à l'étape E43. De même, l'étape E43 est exécutée lorsqu'à l'étape E40 la base de données du serveur de localisation SL ne contient aucun identificateur de zone spatiale où la station mobile se trouvait précédemment ; ce cas survient quand la station mobile est mise en service ou pénètre sous la couverture radio du réseau local.

Au stade de l'étape E44, le procédé de localisation a soit parfaitement localisé la station mobile dans une zone spatiale et une seule, ou bien a localisé celle-ci dans deux zones ou plus dont l'une doit être sélectionnée, ou bien encore n'a trouvé aucune zone où le terminal se trouvait et devra alors déterminer la zone spatiale contenant la station mobile qui est la plus probable. Ces trois cas sont schématisés par les étapes E45, E46 et E47 dans la figure 4. Après celles-ci, l'indicateur de la zone spatiale où est localisée la station mobile est actualisé dans la base de données du serveur de localisation SL à l'étape E48.

A l'étape E46, lorsque l'hyperpoint HP correspondant à la position de la station mobile SM est situé dans plusieurs hyperzones HZ qui se chevauchent, on calcule et compare les distances entre l'hyperpoint HP et les centres des hyperzones de puissance qui se chevauchent. L'hyperpoint est réputé appartenir à l'hyperzone desdites plusieurs hyperzones dont le centre est le plus proche dudit hyperpoint. Dans la base de données, la zone spatiale qui est associée à cette dernière hyperzone, est la zone où se trouve la station mobile recherchée SM.

L'étape E47 pour laquelle ledit hyperpoint HP ayant pour coordonnées les N puissances de réception courantes PC1 à PCN n'appartient à aucune hyperzone HZ1 à HZQ, peut par exemple correspondre à une position de la station mobile dans l'une Zq des zones spatiales à laquelle les signaux émis par les points d'accès AP1 à APN sont fortement atténués respectivement à des valeurs de puissance de réception inférieures aux puissances de réception de référence minimales PRlqm à PRNqm en les points caractéristiques de la zone spatiale Zq. Pour privilégier une zone spatiale plutôt qu'une autre, on calcule dans l'hyperespace la distance de l'hyperpoint HP de la station mobile SM à chacune des hyperzones HZ1 à HZQ. S'il existe une zone de localisation précédente où la station mobile SM se trouvait précédemment à la localisation courante, on additionne une constante prédéterminée si l'hyperzone n'est ni l'ancienne hyperzone correspondant à la zone de localisation précédente, ni une hyperzone correspondant à l'une des zones spatiales qui étaient voisines et communiquaient avec la zone de localisation précédente. On détermine alors pour la station mobile SM la nouvelle zone de localisation pour laquelle la somme de la distance de l'hyperzone correspondante à l'hyperpoint HP pour la station mobile SM plus l'éventuelle constante prédéterminée, par exemple égale à -10 dBm, est minimale. On favorise ainsi la zone de localisation précédente et les zones spatiales qui étaient voisines communiquant avec cette dernière puisqu'il y a une forte probabilité pour que l'usager se trouve à proximité de la zone de localisation précédente.

Si on reprend les valeurs du tableau II, pour une constante prédéterminée égale à -10 dBm et en considérant la zone Z1 non communiquant avec la zone Z2, le tableau II des valeurs minimales et maximales des puissances de réception de référence dans les zones Z1 et Z2 devient le tableau III suivant :

| Zone q | n | AP1 | AP2 | AP3 | AP4 |
|---|---|---|---|---|---|
| 1 | min | - 51 | - 94 | - 84 | - 83 |
| 1 | max | - 46 | - 84 | - 78 | - 74 |
| 2 | min | - 77 | - 92 | - 96 | - 93 |
| 2 | max | - 67 | - 83 | - 85 | - 79 |

Sur la base des puissances de réception de référence minimales et maximales, selon par exemple le tableau III, les hyperzones de puissance correspondant aux zones spatiales non communiquant avec la zone initiale où se trouvait la station mobile sont à nouveau déterminées, comme à l'étape E2, et on exécute à nouveau l'étape de localisation E4 pour en déduire que ledit hyperpoint HP est réputé appartenir à une hyperzone qui est la plus proche dudit hyperpoint HP.

Certaines **améliorations** peuvent être apportées à l'algorithme de localisation E1 à E4 décrit ci-dessus, selon des variantes bien souvent complémentaires présentées ci-après. Ces variantes ont pour objectif d'atténuer certaines différences de mesure dont certaines sont par essence variables, par exemple dépendant de l'hygrométrie dans l'espace de localisation, et dont d'autres sont fixes et prévisibles, par exemple relatives à la technologie mise en oeuvre dans la station mobile SM de l'usager comparativement à la technologie mise en oeuvre dans la station mobile de référence utilisée pour mesurer préalablement les puissances de réception de référence et/ou à la technologie mise en oeuvre dans les points d'accès. Une valeur de décalage (offset) est soustraite à des valeurs des puissances de réception de référence afin de les actualiser en fonction de puissances de réception courantes PC1 à PCN mesurées par la station mobile de l'usager.

Comme déjà dit, la station mobile SM qui est à localiser initie la transmission des adresses des points d'accès AP1 à APN pour lesquels les puissances de réception courantes PC1 à PCN sont supérieures au seuil de puissance minimum prédéterminé, périodiquement ou éventuellement en réponse à une requête d'actualisation du serveur de localisation SL vers les points d'accès, à l'étape E3. Cette requête d'actualisation des points d'accès est périodique, par exemple toutes les 500 ms. Le serveur de localisation SL récupère des informations mises à jour dans les réponses transmises par la station mobile aux points d'accès. Ces informations sont notamment les adresses des points d'accès AP1 à APN, le cas échéant un identificateur de réseau sans fil associé à chaque adresse de point d'accès, et les puissances de réception courantes PC1 à PCN.

Selon une première variante, à chaque transmission de l'une des au plus N puissances de réception courantes PC1 à PCN depuis la station mobile SM pour un point d'accès donné APn, le serveur SL moyenne les puissances de réception courantes pour le point d'accès donné qui ont été mesurées précédemment dans la station mobile, par exemple les cinq dernières puissance de réception courantes. Le serveur SL produit pour le point d'accès donné APn une moyenne de puissance de réception courante constituant une coordonnée de puissance courante PCn de l'hyperpoint HP qui est à situer par rapport aux hyperzones de puissance HZ1 à HZQ, à l'étape E4. Ce moyennage sur par exemple les cinq dernières puissances de réception courantes pour chacun des points d'accès contribue à lisser les variations de puissance de réception dans un laps de temps très court de quelques secondes qui peuvent se produire à cause d'une modification rapide de l'environnement de la station mobile SM, comme par exemple l'ouverture d'une porte, ou la sortie ou l'entrée de plusieurs personnes dans la pièce où la station mobile SM se trouve.

Comme il est connu, une station mobile ne peut pas être localisée ponctuellement au moyen des puissances de réception courantes associées à seulement deux points d'accès. En effet, il est nécessaire qu'il y ait au moins trois points d'accès pour localiser une station mobile sensiblement à l'intersection de trois cercles centrés sur les points d'accès et ayant des rayons proportionnels aux puissances de réception.

Selon une caractéristique de l'invention, lorsque le nombre de puissances de réception courantes PC1 à PCN qui sont supérieures au seuil de puissance de réception minimum prédéterminé dans la station mobile à l'étape E3 est inférieur à trois, la puissance de réception courante restante ou les deux puissances de réception courantes restantes sont complétées par au moins une ou deux puissances de réception, ou plus généralement par les puissances de réception courantes qui ont été mesurées et enregistrées à une ou plusieurs étapes de mesure E3 immédiatement précédentes. Ces puissances de réception précédentes qui complètent les puissances de réception courantes mesurées à l'étape courante E3 sont associées aux point d'accès AP correspondant à des puissances de réception qui viennent d'être mesurées et qui sont inférieures au seuil de puissance de réception minimum prédéterminé.

Cette dernière caractéristique permet, grâce à la mémorisation des puissances de réception en association avec les adresses des points d'accès dans le serveur de localisation SL de poursuivre la localisation de la station mobile sans discontinuité. Au pire, lorsque la station mobile est momentanément ou de manière intermittente hors de portée de tous les points d'accès, la station mobile est alors considérée comme localisée dans la dernière zone spatiale où elle a été localisée.

Une autre variante de l'invention considère l'influence des conditions météorologiques dans la mesure des puissances, et particulièrement l'hygrométrie de l'atmosphère ambiant régnant autour de la station mobile SM. En effet, une atmosphère chargée d'humidité ou de vapeur d'eau est plus atténuatrice qu'une atmosphère sèche.

Pour remédier à cette atténuation, une correction des N puissances de réception de référence en chaque point caractéristique est effectuée à une **étape supplémentaire E11** après l'étape de mesure de puissances de réception E1, pour chacune des zones spatiales Z1 à ZQ. Cette correction est basée sur un mode différentiel évaluant les différentiels des puissances de réception de référence pour tous les points d'accès relativement à chaque point caractéristique d'une zone comparativement à la puissance de réception maximale de référence pour ce point caractéristique de manière à déterminer l'hyperzone de puissance de la zone spatiale correspondante non pas directement sur la base des puissances des signaux reçus, mais sur des rapports des puissances entre elles. Pour ce mode différentiel, la correction des au plus N puissances de réception de référence en chaque point caractéristique d'une zone spatiale, tel que les points S10 à S13 de la zone Z1, consiste à additionner une constante arbitraire avant de déterminer l'hyperzone de puissance dans l'hyperespace à N dimensions à l'étape E2.

En reprenant par exemple les puissances de réception pour les zones Z1 et Z2 selon le tableau I, et en alignant les puissances de réception mesurées relatives au premier point d'accès AP1 à une valeur de - 20 dBm, le tableau I est transformé selon le mode différentiel en le tableau suivant IV:

| Sommet | zone q | AP1 | AP2 | AP3 | AP4 |
|---|---|---|---|---|---|
| 0 | 1 | - 20 | - 63 | - 58 | - 57 |
| 1 | 1 | - 20 | - 64 | - 56 | - 50 |
| 2 | 1 | - 20 | - 63 | - 53 | - 52 |
| 3 | 1 | - 20 | - 54 | - 48 | - 44 |
| 0 | 2 | - 20 | - 35 | - 36 | - 37 |
| 1 | 2 | - 20 | - 42 | - 45 | - 42 |
| 2 | 2 | - 20 | - 35 | - 39 | - 36 |
| 3 | 2 | - 20 | - 26 | - 28 | - 22 |

Dans la première ligne pour le sommet S10, la constante arbitraire est égale à - 20 - max (AP1, AP2, AP3, AP4) = + 26 ; selon un autre exemple, pour le sommet S21, la constante arbitraire est égale à - 20 - max (AP1, AP2, AP3, AP4) = - 20 + 57 = + 37.

Par exemple, pour le point d'accès AP2, l'intervalle de puissance de réception est [- 73, - 94] dBm par temps sec et [- 77, - 99] dBm par temps humide, ce qui peut fausser la localisation de la station mobile SM. Le mode différentiel ramène l'intervalle par temps sec à [- 26, - 64] dBm par temps sec, et par temps humide à [- 26, - 65] dBm. L'influence de l'hygrométrie environnante est ainsi pratiquement inhibée.

Puis, en fonction des puissances de réception ainsi corrigées, le serveur de localisation SL détermine à l'étape E2 dans l'hyperespace à N coordonnées de puissance les hyperzones de puissance associées aux zones spatiales.

En outre, cette variante par mode différentiel des puissances de réception offre une excellente robustesse de la localisation contre le phénomène "d'enfouissement" lorsque la station mobile est située dans un sac, dans la main ou dans un meuble particulier métallique, et contre des variations dues à la technologie des composants internes aux stations mobiles qui diffèrent d'un constructeur à l'autre.

Selon une autre variante complémentaire illustrée par l'étape E31 succédant à la mesure des puissances de réception courantes à l'étape E3, le procédé de localisation considère une exception notable à la localisation de la station mobile SM en fonction de la position de l'hyperpoint HP ayant pour coordonnées les puissances de réception courantes PC1 à PCN par rapport aux hyperzones HZ, lorsque la station mobile est située à proximité immédiate d'un point d'accès. Dans cette variante, la simple mesure de la puissance de réception issue de ce point d'accès proche est un critère suffisant pour confirmer que la station mobile est située dans le voisinage de ce point d'accès.

Le serveur de localisation SL procède à l'étape E31, à une comparaison des puissances de réception courantes PC1 à PCN à un seuil de puissance de réception maximal THmax de manière à en déduire que la station mobile est localisée dans une zone spatiale incluant le point d'accès, ou tout au moins à proximité immédiate de celui-ci, pour lequel la puissance de réception courante est supérieure au seuil de puissance de réception maximal. Pour cette variante, les puissances courantes relatives aux autres points d'accès sont ignorées par le serveur SL pour localiser la station mobile SM avec certitude.

Les valeurs des puissances de réception courantes relatives aux autres points d'accès sont de préférence utilisées pour détecter d'éventuelles atténuations ou amplifications des signaux émis par les points d'accès par rapport aux puissances de réception de référence qui ont été mesurées préalablement à l'étape E1 et mémorisées dans le serveur de localisation SL et qui servent de référence pour la détermination des hyperzones de puissance HZ1 à HZQ en association avec les zones spatiales Z1 à ZQ, à l'étape E2.

Par exemple, si la station mobile SM a mesuré à l'étape E3 les puissances de réception courantes suivantes de - 40 dBm, - 88 dBm, - 87 dBm pour des points d'accès AP1, AP2 et AP3, le serveur de localisation SL constate que la puissance de réception courante relative au point d'accès AP1 est supérieure au seuil de puissance maximal THmax = - 45 dBm. Le serveur SL en déduit que la station mobile est très proche du point d'accès AP1 et est située dans la zone Z1 incluant le point d'accès AP1.
Si par ailleurs, on suppose que les puissances de réception de référence minimales et maximales PR11m, PR11M à PR31m, PR31M en les points caractéristiques S10 à S13 de la zone Z1 sont les suivantes pour les points d'accès AP1, AP2 et AP3 :
- 20 dBm > AP1 > - 51 dBm
- 78 dBm > AP2 > - 84 dBm
- 74 dBm > AP3 > - 83 dBm.

Les puissances de réception courantes PC2 et PC3 pour les autres points d'accès AP2 et AP3 étant respectivement inférieures aux puissances de réception de référence minimales PR21m et PR31m préalablement mesurées à l'étape E1, ces dernières doivent être remplacées respectivement par les puissances de réception courantes PC2 et PC3 pour les autres points d'accès de manière à corriger les intervalles de puissance. Dans cet exemple, le serveur SL corrige les intervalles de puissance à une étape E32, en fonction d'un décalage de puissances (offset) OS égal à une différence de puissances de réception minimale de - 88 - (- 84) = - 4 = - 87 - (-83) dBm. Plus généralement, le décalage de puissance OS est un décalage moyen entre d'une part les puissances de réception de référence minimales pour la zone spatiale Z1 où est localisée la station mobile et pour les points d'accès autres que le point d'accès AP1 pour lequel la puissance de réception courante est supérieure au seuil de puissance de réception maximal et d'autre part les puissances de réception courantes AP2 à APN pour lesdits autres points d'accès.

Les intervalles de variation à l'étape E1 pour une correction de la détermination des hyperzones de puissance à l'étape E2, deviennent les suivants :
- 20 dBm > AP1 > - 51 dBm
- 82 dBm > AP2 > - 88 dBm
- 78 dBm > AP3 > - 87 dBm.

Cette correction des intervalles de variation des puissances de réception selon le décalage OS pour les points d'accès AP1, AP2 et AP3 reflètent des variations environnementales ou climatiques notamment dans la zone spatiale Z1, comme par exemple l'ouverture d'une porte d'accès à la zone spatiale Z1 et un refroidissement de celle-ci.

Cette dernière correction concerne la zone Z1 où se trouve la station mobile SM. Pour appliquer des corrections aux autres zones Zq, ici Z2 à ZQ, un algorithme de rétro-propagation est appliqué à ces décalages de puissance de réception.

Par exemple, un algorithme de rétro-propagation récursif simple comprend outre les étapes E31 et E32 les étapes suivantes E33 et E34 pour que la puissance de réception courante mesurée relative à un point d'accès donné APn et supérieure au seuil de puissance de réception minimal THmin soit éventuellement corrigée en fonction du décalage moyen OS pour le point d'accès donné APn.

A l'étape E33, si la zone spatiale Zq est une zone communiquant par une porte avec la zone Z1 où se trouve la station mobile SM, on retranche un premier décalage OS1 de quelques dBm à la valeur absolue du décalage moyen OS pour le point d'accès donné APn avant de l'appliquer à cette zone communicante Zq, c'est-à-dire avant de déterminer l'hyperzone de puissance HZq pour cette zone communicante. Typiquement, les quelques dBm retranchés sont de OS1=3 dBm et correspondent à l'atténuation moyenne d'une porte vitrée. La différence (OS - OS1) entre le décalage moyen et le premier décalage est soustraite aux puissances de réception de référence minimales PRlqm à PR1qM qui ne sont qu'associées aux points caractéristiques de la zone spatiale Zq communiquant partiellement avec la zone spatiale Z1 où est localisée la station mobile si le décalage moyen OS est supérieur au premier décalage OS1. Si la valeur absolue du décalage OS de la zone d'origine Z1 est inférieure ou égale à OS1=3 dBm, aucun décalage n'est appliqué et les intervalles de variation de puissance de référence PRlqm, PRlqM à PRNqm, PRNqM pour les points caractéristiques de la zone communicante Zq ne sont pas modifiés après l'étape E3.

La deuxième étape E34 de l'algorithme de rétro-propagation récursif est relative à une zone Zq communiquant avec la zone d'origine Z1 qui n'est séparée de celle-ci par aucun obstacle, cloison ou vitre ou meuble notamment. Le serveur de localisation SL retranche alors un deuxième décalage OS2 = 1 dBm à la valeur absolue du décalage OS à appliquer pour cette zone communicante Zq si celle-ci est considérée comme plus proche du point d'accès donné APn, le premier décalage étant supérieur au deuxième décalage. La différence (OS - OS2) entre le décalage moyen et le deuxième décalage est soustraite aux puissances de réception de référence minimales PRlqm à PR1qM qui ne sont qu'associées aux points caractéristiques de la zone spatiale Zq communiquant totalement avec la zone spatiale où est localisée la station mobile si le décalage moyen OS est supérieur au deuxième décalage OS2. Naturellement, comme précédemment, si la valeur absolue du décalage OS de la zone d'origine Z1 est quasiment nulle, c'est-à-dire inférieure ou égale à OS2 = 1 dBm, aucune correction n'est appliquée aux puissances de référence minimales et maximales PRlqm, PRlqM à PRNqm, PRNqM pour la zone communicante qui servent à la détermination de l'hyperzone HZq.

Pour toutes les autres zones ne communiquant pas directement avec la zone d'origine Z1, le décalage OS est répercuté sur les puissances de réception de référence minimales.

Les corrections établies aux étapes précédentes E33 et E34 remédient avantageusement aux variations temporaires, particulièrement climatiques, des conditions de réception, en l'occurrence par la station mobile. Cette correction peut être avantageusement applicable pour un réseau de points d'accès standard.

Bien que l'invention ait été décrite ci-dessus en supposant qu'à l'étape E3 les puissances de réception courantes soient mesurées périodiquement par la station mobile SM, puis transmises à travers les points d'accès vers le serveur de localisation SL qui localise périodiquement la station mobile dans l'ensemble des zones spatiales Z1 à ZQ, l'objet de l'invention concerne également, à cause de la réciprocité des deux sens de transmission de signaux de radiocommunication, la mesure à l'étape E3 de N puissances de réception courantes PC1 à PCN respectivement dans les N points d'accès AP1 à APN respectivement pour des puissances d'émission identiques et en pratique confondues depuis la station mobile en tant que "l'autre des éléments formés par la station mobile et l'ensemble des N points d'accès". Dans cette **deuxième réalisation**, les puissances de réception courantes PC1 à PCN sont respectivement mesurées périodiquement par les points d'accès AP1 à APN qui les transmettent au serveur de localisation SL via le réseau de distribution RD. Cette deuxième réalisation, comparativement à la première réalisation, est avantageuse par la suppression d'un logiciel de mesure et de transmission de puissances de réception résident dans la station mobile de l'usager.

Il est à noter, que dans le cas du WiFi, le respect strict des normes impose de laisser un logiciel résident dans la station mobile faisant que celle-ci envoie régulièrement un signal de recherche de réseau, afin que le réseau de points d'accès AP mesure régulièrement la puissance de ce signal. En revanche, ce logiciel résident n'a ni à collecter ni à transmettre de mesure de puissance. Pour éviter un logiciel résident dans la station mobile SM, il faudrait enrichir la normalisation et doter les points d'accès d'une fonction d'analyse active.

De même, les puissances de réception de référence à l'étape E1 sont mesurées dans les points d'accès AP1 à APN respectivement en plaçant une station mobile de référence aux divers points caractéristiques S1 à SQ de toutes les zones spatiales Z1 à ZQ ; dans ce cas, pour chaque zone spatiale Zq, les points d'accès constituent "des extrémités de segments formés chacun par des points caractéristiques de la zones spatiale Zq et de l'un des points d'accès" pour mesurer les puissances de réception de référence et les "autres extrémités des segments" sont constituées par les points caractéristiques S1 à SQ des zones spatiales Z1 à ZQ.

Dans cette deuxième réalisation, chaque point d'accès APn supporte un logiciel de collecte de mesures de puissances de réception de référence pour recevoir et mesurer des niveaux de puissance provenant des stations mobiles dans leurs cellules respectives, mais également des niveaux de puissance de réception provenant des autres points d'accès AP1 à AP(n-1) et AP(n+1) à APN du réseau local qui sont respectivement dans sa limite de portée. Ces puissances de réception mesurées entre les différents points d'accès AP1 à APN constituent de préférence des deuxièmes puissances de réception de référence qui complètent les premières puissances de réception de référence mesurées à l'aide d'une station mobile de référence. Dans cette deuxième réalisation, les points d'accès constituent eux-mêmes des points caractéristiques respectivement dans les zones spatiales. Par exemple en référence à la figure 1, le point d'accès AP1 inclus dans la zone spatiale Z1 est considéré comme un point caractéristique de la zone Z1.

Pour améliorer les corrections des N puissances de réception de référence en chaque point caractéristique à l'étape E1 suivie éventuellement de l'étape supplémentaire E11, pour chacune des zones spatiales Z1 à ZQ, une sonde hygrométrique placée dans l'espace de localisation des zones Z1 à ZQ et reliée au serveur de localisation SL sélectionne en fonction du taux d'humidité ambiante l'une de tables de puissances de référence minimales et maximales PRlqm, PRlqM à PRNqm, PRNqM préalablement établies pour divers taux d'humidité à l'étape E1 de manière à déterminer à l'étape E2 les hyperzones HZ1 à HZQ en fonction de la table sélectionnée. La valeur courante du taux d'humidité et par conséquent les hyperzones HZ1 à HZQ correspondantes à celle-ci sont mémorisées et actualisées dans la base de données du serveur SL en fonction du taux d'humidité ambiante, par exemple toutes les heures.

Une réalisation simple de la sonde hygrométrique est de mesurer les variations des puissances de réception entre deux points d'accès à portée radio directe et peu susceptibles d'être soumis à des perturbations autres qu'hygrométriques, par exemple deux points d'accès placés en hauteur dans un même couloir ou un même espace paysager.

En outre, les deuxièmes puissances de réception de référence peuvent être mesurées périodiquement comme les premières puissances de réception courantes de manière à déterminer un décalage moyen entre d'une part les deuxièmes puissances de réception de référence minimales pour l'ensemble des zones spatiales et d'autre part les premières puissances de réception courantes qui ont été mesurées lors d'une localisation précédente relativement aux points d'accès afin de compenser les variations de conditions de propagation, d'une manière analogue aux étapes E31 à E34.

Par exemple, on détermine par ce moyen des changements entre les points d'accès comme des déplacements d'obstacles mobiles entre les points d'accès, par exemple l'ouverture ou la fermeture de portes entre les points d'accès, et on en déduit des corrections à apporter aux puissances de référence mesurées. Ceci est particulièrement efficace si les variations liées aux conditions hygrométriques sont corrigées grâce au procédé décrit précédemment.

Enfin, si ce procédé est mis en oeuvre, le passage à proximité immédiate d'un point d'accès tel que décrit à l'étape E31 peut être utilisé non plus pour corriger les valeurs des mesures des puissances de référence en fonction des conditions particulières, mais les caractéristiques particulières de réception de la station mobile SM.

L'invention décrite ici concerne un procédé et un serveur SL pour localiser une station mobile SM. Selon une implémentation préférée, les étapes du procédé de l'invention sont déterminées par les instructions d'un programme d'ordinateur incorporé dans le serveur. Le programme comporte des instructions de programme qui, lorsque ledit programme est chargé et exécuté dans le serveur, dont le fonctionnement est alors commandé par l'exécution du programme, réalisent les étapes du procédé selon l'invention.

En conséquence, l'invention s'applique également à un programme d'ordinateur, notamment un programme d'ordinateur sur ou dans un support d'informations, adapté à mettre en oeuvre l'invention. Ce programme peut utiliser n'importe quel langage de programmation, et être sous la forme de code source, code objet, ou de code intermédiaire entre code source et code objet tel que dans une forme partiellement compilée, ou dans n'importe quelle autre forme souhaitable pour implémenter le procédé selon l'invention.

Le support d'informations peut être n'importe quelle entité ou dispositif capable de stocker le programme. Par exemple, le support peut comporter un moyen de stockage ou support d'enregistrement, tel qu'une ROM, par exemple un CD ROM ou une ROM de circuit microélectronique, ou encore une clé USB, ou encore un moyen d'enregistrement magnétique, par exemple une disquette (floppy disc) ou un disque dur. D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type internet.

Alternativement, le support d'informations peut être un circuit intégré dans lequel le programme est incorporé, le circuit étant adapté pour exécuter ou pour être utilisé dans l'exécution du procédé selon l'invention.

## Revendications

1. Procédé pour localiser une station mobile (SM) dans un réseau local sans fil accessible dans des zones spatiales (Z1 à ZQ) et comprenant N points d'accès (AP1 à APN), N étant un entier au moins égal à 3, le procédé comprenant une mesure (E3) de N puissances de réception courantes (PC1 à PCN) dans l'un des éléments formés par la station mobile (SM) et l'ensemble des N points d'accès respectivement pour des puissances d'émission prédéterminées depuis l'autre des éléments, **caractérisé en ce qu'**il comprend les étapes suivantes :
préalablement pour chaque zone spatiale (Zq), mesure (E1) de puissances de réception de référence à des extrémités de segments (Sq, APn) formés chacun par l'un de points caractéristiques de la zone spatiale (Zq) et l'un des points d'accès pour lesdites puissances d'émission prédéterminées aux autres extrémités des segments, comparaison des puissances de réception de référence mesurées aux extrémités des segments (Sq, APn) pour déduire des puissances de réception de référence minimales et maximales (PRlqm, PRlqM à PRNqm, PRNqM) respectivement associées aux points d'accès et à la zone spatiale, et détermination (E2) d'une hyperzone de puissance (HZq) dans un hyperespace à N coordonnées respectivement associées aux puissances de réception des N points d'accès (AP1 à APN), l'hyperzone (HZq) ayant des coordonnées limitées par les puissances de réception de référence minimales et maximales (PRlqm, PRlqM à PRNqm, PRNqM), et
après la mesure des N puissances de réception courantes, localisation (E4) de la station mobile (SM) dans l'une des zones spatiales lorsqu'un hyperpoint (HP) ayant pour coordonnées dans l'hyperespace les N puissances de réception courantes appartient à l'hyperzone déterminée pour la zone spatiale.

2. Procédé conforme à la revendication 1, selon lequel la localisation (E4) de la station mobile (SM) commence par une recherche (E41) de l'hyperpoint (HP) dans une première hyperzone correspondant à la zone spatiale où la station mobile se trouvait précédemment à la localisation, puis (E42) dans les hyperzones correspondant aux zones spatiales communiquant avec la zone spatiale précédente, et finalement (E43) dans les hyperzones restantes.

3. Procédé conforme à la revendication 1 ou 2, selon lequel, lorsque ledit hyperpoint (HP) ayant pour coordonnées les N puissances de réception courantes (PC1 à PCN) appartient (E46) à plusieurs hyperzones, ledit hyperpoint est réputé appartenir à l'hyperzone qui est la plus proche dudit hyperpoint (HP).

4. Procédé conforme à l'une quelconque des revendications 1 à 3, comprenant, lorsque ledit hyperpoint (HP) ayant pour coordonnées les N puissances de réception courantes (PC1 à PCN) n'appartient (E47) à aucune hyperzone (HZ1 à HZQ), un calcul dans l'hyperespace de la distance de l'hyperpoint (HP) à chacune des hyperzones (HZ1 à HZQ), et une addition d'une constante prédéterminée si l'hyperzone n'est ni l'ancienne hyperzone correspondant à la zone de localisation précédente, ni une hyperzone correspondant à l'une des zones spatiales qui étaient voisines et communiquaient avec la zone de localisation précédente, et une détermination d'une nouvelle zone de localisation pour laquelle la somme de la distance de l'hyperzone correspondante à l'hyperpoint (HP) plus la constante prédéterminée est minimale.

5. Procédé conforme à l'une quelconque des revendications 1 à 4, selon lequel après chaque mesure des puissances de réception courantes (E3), chaque puissance de réception courante (PC1 à PCN) est moyennée sur plusieurs puissances de réception courantes précédentes en une moyenne de puissance de réception constituant une coordonnée de l'hyperpoint (HP).

6. Procédé conforme à l'une quelconque des revendications 1 à 5, selon lequel, lorsque le nombre de puissances de réception courantes qui sont supérieures à un seuil de puissance de réception minimum prédéterminé est inférieur à trois, les puissances de réception courantes (PC1 à PCN) sont complétées par des puissances de réception qui ont été mesurées précédemment à au moins une étape de mesure (E3) et qui sont associées aux points d'accès (AP) correspondant à des puissances de réception courantes inférieures au seuil de puissance de réception minimum.

7. Procédé conforme à l'une quelconque des revendications 1 à 6, comprenant une augmentation (E11) des puissances de réception de référence à une valeur arbitraire pour le point d'accès associé aux puissances de réception les plus élevées en moyenne et une correction (E11) des puissances de réception de référence associées à chaque point caractéristique de chaque zone spatiale en leur appliquant le même décalage qu'à la puissance de réception maximale afin de déterminer (E2) dans l'hyperespace les hyperzones (HZ1 à HZQ) associées aux zones spatiales en fonction des puissances de réception de référence corrigées.

8. Procédé conforme à l'une quelconque des revendications 1 à 7, comprenant une comparaison (E31) des puissances de réception courantes (PC1 à PCN) à un seuil de puissance de réception maximal pour localiser la station mobile dans une zone spatiale (Z1 à ZQ) à proximité immédiate d'un point d'accès pour lequel la puissance de réception courante est supérieure au seuil de puissance de réception maximal.

9. Procédé conforme à la revendication 8, comprenant un remplacement (E32) des puissances de réception de référence minimales pour la zone spatiale où est localisée la station mobile et pour les points d'accès autres que le point d'accès pour lequel la puissance de réception courante est supérieure au seuil de puissance de réception maximal, respectivement par les puissances de réception courantes pour lesdits autres points d'accès.

10. Procédé conforme à la revendication 8 ou 9, comprenant une évaluation (E32) d'un décalage moyen (OS) entre d'une part les puissances de réception de référence minimales pour la zone spatiale où est localisée la station mobile et pour les points d'accès autres que le point d'accès pour lequel la puissance de réception courante est supérieure au seuil de puissance maximal et d'autre part les puissances de réception courantes pour lesdits autres points d'accès, et une application (E33, E34) d'un algorithme de rétro-propagation pour que la puissance de réception courante mesurée relative à un point d'accès donné (APn) soit corrigée en fonction du décalage moyen pour le point d'accès donné.

11. Procédé conforme à l'une quelconque des revendications 1 à 10, selon lequel, une sonde hygrométrique placée dans les zones spatiales (Z1 à ZQ) sélectionne en fonction d'un taux d'humidité l'une de tables de puissances de référence minimales et maximales (PRlqm, PRlqM à PRNqm, PRNqM) préalablement établies (E1) pour divers taux d'humidité de manière à déterminer (E2) les hyperzones (HZ1 à HZQ) en fonction de la table sélectionnée.

12. Procédé conforme à l'une quelconque des revendications 1 à 11, selon lequel l'élément (SM ou AP1 à APN) mesurant les puissances de réception courantes (PC1 à PCN) transmet périodiquement les puissances de réception courantes à un moyen centralisé (SL) qui est relié aux points d'accès (AP1 à APN) et localise (E4) la station mobile (SM) dans l'une des zones spatiales.

13. Procédé conforme à l'une quelconque des revendications 1 à 12, comprenant à chaque point d'accès (AP1 à APN) une mesure de deuxièmes puissances de réception de référence provenant des autres points d'accès, complétant des premières puissances de réception de référence mesurées à l'aide d'une station mobile, afin de déterminer des changements entre les points d'accès et corriger les puissances de référence mesurées.

14. Serveur (SL) pour localiser une station mobile (SM) dans un réseau local sans fil accessible dans des zones spatiales (Z1 à ZQ) et comprenant N points d'accès (AP1 à APN), N étant un entier au moins égal à 3, le serveur recevant N puissances de réception courantes (PC1 à PCN) mesurées dans l'un des éléments formés par la station mobile (SM) et l'ensemble des N points d'accès respectivement pour des puissances d'émission prédéterminées depuis l'autre des éléments,
**caractérisé en ce que**, préalablement pour chaque zone spatiale (Zq), après une mesure (E1) de puissances de réception de référence à des extrémités de segments (Sq, APn) formés chacun par l'un de points caractéristiques de la zone spatiale (Zq) et l'un des points d'accès pour lesdites puissances d'émission prédéterminées aux autres extrémités des segments, le serveur compare les puissances de réception de référence mesurées aux extrémités des segments (Sq, APn) pour déduire des puissances de réception de référence minimales et maximales (PRlqm, PRlqM à PRNqm, PRNqM) respectivement associées aux points d'accès et à la zone spatiale et détermine une hyperzone de puissance (HZq) dans un hyperespace à N coordonnées respectivement associées aux puissances de réception des N points d'accès (AP1 à APN), l'hyperzone (HZq) ayant des coordonnées limitées par les puissances de réception de référence minimales et maximales (PR1qm, PR1qM à PRNqm, PRNqM), et
après la mesure des N puissances de réception courantes, le serveur localise la station mobile (SM) dans l'une des zones spatiales lorsqu'un hyperpoint (HP) ayant pour coordonnées dans l'hyperespace les N puissances de réception courantes appartient à l'hyperzone déterminée pour la zone spatiale.

15. Programme d'ordinateur apte à être mis en oeuvre dans un serveur (SL) pour localiser une station mobile (SM) dans un réseau local sans fil accessible dans des zones spatiales (Z1 à ZQ) et comprenant N points d'accès (AP1 à APN), N étant un entier au moins égal à 3, le serveur recevant N puissances de réception courantes (PC1 à PCN) mesurées dans l'un des éléments formés par la station mobile (SM) et l'ensemble des N points d'accès respectivement pour des puissances d'émission prédéterminées depuis l'autre des éléments, ledit programme comprenant des instructions qui, lorsque le programme est chargé et exécuté dans ledit serveur, réalisent les étapes suivantes :
préalablement pour chaque zone spatiale (Zq), après une mesure (E1) de puissances de réception de référence à des extrémités de segments (Sq, APn) formés chacun par l'un de points caractéristiques de la zone spatiale (Zq) et l'un des points d'accès pour lesdites puissances d'émission prédéterminées aux autres extrémités des segments, comparaison des puissances de réception de référence mesurées aux extrémités des segments (Sq, APn) pour déduire des puissances de réception de référence minimales et maximales (PRlqm, PRlqM à PRNqm, PRNqM) respectivement associées aux points d'accès et à la zone spatiale, et détermination (E2) d'une hyperzone de puissance (HZq) dans un hyperespace à N coordonnées respectivement associées aux puissances de réception des N points d'accès (AP1 à APN), l'hyperzone (HZq) ayant des coordonnées limitées par les puissances de réception de référence minimales et maximales (PRlqm, PRlqM à PRNqm, PRNqM), et
après la mesure des N puissances de réception courantes, localisation (E4) de la station mobile (SM) dans l'une des zones spatiales lorsqu'un hyperpoint (HP) ayant pour coordonnées dans l'hyperespace les N puissances de réception courantes appartient à l'hyperzone déterminée pour la zone spatiale.

## Claims

1. Method for locating a mobile station (SM) in a local wireless network that is accessible in spatial zones (Z1 to ZQ) and comprising N access points (AP1 to APN), N being an integer at least equal to 3, the method comprising a measurement (E3) of N current reception powers (PC1 to PCN) in one of the elements formed by the mobile station (SM) and all of the N access points respectively for predetermined transmission powers from the other of the elements, **characterized in that** it comprises the following steps:
first, for each spatial zone (Zq), measuring (E1) of reference reception powers at the ends of segments (Sq, APn) each formed by one of the points characteristic of the spatial zone (Zq) and one of the access points for said predetermined transmission powers at the other ends of the segments, comparison of the reference reception powers measured at the ends of the segments (Sq, APn) in order to deduce minimum and maximum reference reception powers (PRlqm, PR1qM to PRNqm, PRNqM) respectively associated with the access points and with the spatial zone, and determining (E2) of a power hyperzone (HZq) in a hyperspace at N coordinates respectively associated with the reception powers of the N access points (AP1 to APN), the hyperzone (HZq) having coordinates limited by the minimum and maximum reference reception powers (PRlqm, PRlqM to PRNqm, PRNqM), and
after the measuring of the N current reception powers, locating (E4) of the mobile station (SM) in one of the spatial zones, when a hyperpoint (HP) having as its coordinates in the hyperspace the N current reception powers belongs to the determined hyperzone for the spatial zone.

2. Method according to Claim 1, according to which the locating (E4) of the mobile station (SM) begins with a search (E41) for the hyperpoint (HP) in a first hyperzone corresponding to the spatial zone in which the mobile station was prior to the locating, then (E42) in the hyperzones corresponding to the spatial zones communicating with the previous spatial zone, and finally (E43) in the remaining hyperzones.

3. Method according to Claim 1 or 2, according to which, when said hyperpoint (HP) having as its coordinates the N current reception powers (PC1 to PCN) belongs (E46) to several hyperzones, said hyperpoint is considered to belong to the hyperzone that is closest to said hyperpoint (HP).

4. Method according to any one of Claims 1 to 3, comprising, when said hyperpoint (HP) having as its coordinates the N current reception powers (PC1 to PCN) does not belong (E47) to any hyperzone (HZ1 to HZQ), a computation in the hyperspace of the distance from the hyperpoint (HP) to each of the hyperzones (HZ1 to HZQ), and an addition of a predetermined constant if the hyperzone is neither the old hyperzone corresponding to the previous locating zone, nor a hyperzone corresponding to one of the spatial zones that were adjacent and communicated with the previous locating zone, and a determination of a new locating zone for which the total of the distance from the corresponding hyperzone to the hyperpoint (HP) plus the predetermined constant is minimum.

5. Method according to any one of Claims 1 to 4, according to which, after each measurement of the current reception powers (E3), each current reception power (PC1 to PCN) is averaged over several previous current reception powers into a reception power average forming a coordinate of the hyperpoint (HP).

6. Method according to any one of Claims 1 to 5, according to which, when the number of current reception powers that are higher than a predetermined minimum reception power threshold is less than three, the current reception powers (PC1 to PCN) are supplemented by reception powers that have been measured previously at at least one measurement step (E3) and which are associated with the access points (AP) corresponding to current reception powers lower than the minimum reception power threshold.

7. Method according to any one of Claims 1 to 6, comprising an increasing (E11) of the reference reception powers to an arbitrary value for the access point associated with the highest reception powers on average and a correcting (E11) of the reference reception powers associated with each point characteristic of each spatial zone by applying to them the same offset as to the maximum reception power in order to determine (E2) in the hyperspace the hyperzones (HZ1 to HZQ) associated with the spatial zones according to the corrected reference reception powers.

8. Method according to any one of Claims 1 to 7, comprising a comparing (E31) of the current reception powers (PC1 to PCN) with a maximum reception power threshold in order to locate the mobile station in a spatial zone (Z1 to ZQ) immediately next to an access point for which the current reception power is above the maximum reception power threshold.

9. Method according to Claim 8, comprising a replacing (E32) of the minimum reference reception powers for the spatial zone in which the mobile station is located and for the access points other than the access point for which the current reception power is above the maximum reception power threshold, respectively with the current reception powers for said other access points.

10. Method according to Claim 8 or 9, comprising an evaluating (E32) of an average offset (OS) between, on the one hand, the minimum reference reception powers for the spatial zone in which the mobile station is located and for the access points other than the access point for which the current reception power is above the maximum power threshold and, on the other hand, the current reception powers for said other access points, and an applying (E33, E34) of a back propagation algorithm so that the measured current reception power relative to a given access point (APn) is corrected according to the average offset for the given access point.

11. Method according to any one of Claims 1 to 10, according to which a hygrometric probe placed in the spatial zones (Z1 to ZQ) selects, as a function of a humidity ratio, one of the minimum and maximum reference power tables (PRlqm, PRlqM to PRNqm, PRNqM) previously established (E1) for various humidity ratios so as to determine (E2) the hyperzones (HZ1 to HZQ) according to the selected table.

12. Method according to any one of Claims 1 to 11, according to which the element (SM or AP1 to APN) measuring the current reception powers (PC1 to PCN) periodically transmits the current reception powers to a centralized means (SL) which is connected to the access points (AP1 to APN) and locates (E4) the mobile station (SM) in one of the spatial zones.

13. Method according to any one of Claims 1 to 12, comprising, at each access point (AP1 to APN), a measuring of second reference reception powers originating from the other access points, supplementing first reference reception powers measured with the aid of a mobile station, in order to determine the changes between the access points and correct the measured reference powers.

14. Server (SL) in order to locate a mobile station (SM) in a local wireless network that is accessible in spatial zones (Z1 to ZQ) and comprising N access points (AP1 to APN), N being an integer at least equal to 3, the server receiving N current reception powers (PC1 to PCN) measured in one of the elements formed by the mobile station (SM) and all of the N access points respectively for predetermined transmission powers from the other of the elements,
**characterized in that**, first for each spatial zone (Zq), after a measuring (E1) of reference reception powers at the ends of segments (Sq, APn) each formed by one of the points characteristic of the spatial zone (Zq) and one of the access points for said predetermined transmission powers at the other ends of the segments, the server compares the reference reception powers measured at the ends of the segments (Sq, APn) in order to deduce minimum and maximum reference reception powers (PRlqm, PRlqM to PRNqm, PRNqM) respectively associated with the access points and with the spatial zone and determines a power hyperzone (HZq) in a hyperspace at N coordinates respectively associated with the reception powers of the N access points (AP1 to APN), the hyperzone (HZq) having coordinates limited by the minimum and maximum reference reception powers (Pr1qm, PR1qM to PRNqm, PRNqM), and
after the measuring of the N current reception powers, the server locates the mobile station (SM) in one of the spatial zones when a hyperpoint (HP) having as its coordinates in the hyperspace the N current reception powers belongs to the determined hyperzone for the spatial zone.

15. Computer program capable of being implemented in a server (SL) for locating a mobile station (SM) in a local wireless network that is accessible in spatial zones (Z1 to ZQ) and comprising N access points (AP1 to APN), N being an integer at least equal to 3, the server receiving N current reception powers (PC1 to PCN) measured in one of the elements formed by the mobile station (SM) and all of the N access points respectively for predetermine transmission powers from the other of the elements, said program comprising instructions which, when the program is loaded and executed in said server, carry out the following steps:
first, for each spatial zone (Zq), after a measuring (E1) of reference reception powers at the ends of segments (Sq, APn) each formed by one of the points characteristic of the spatial zone (Zq) and one of the access points for said predetermined transmission powers at the other ends of the segments, comparing of the reference reception powers measured at the ends of the segments (Sq, APn) in order to deduce minimum and maximum reference reception powers (PR1qm, PR1qM to PRNqm, PRNqM) respectively associated with the access points and with the spatial zone, and determining (E2) of a power hyperzone (HZq) in a hyperspace at N coordinates respectively associated with the reception powers of the N access points (AP1 to APN), the hyperzone (HZq) having coordinates limited by the minimum and maximum reference reception powers (PRlqm, PRlqM to PRNqm, PRNqM), and
after the measuring of the N current reception powers, locating (E4) of the mobile station (SM) in one of the spatial zones when a hyperpoint (HP) having as its coordinates in the hyperspace the N current reception powers belongs to the determined hyperzone for the spatial zone.

## Patentansprüche

1. Verfahren zum Orten einer mobilen Station (SM) in einem WLAN, auf das in räumlichen Zonen (Z1 bis ZQ) zugegriffen werden kann und das N Zugriffspunkte (AP1 bis APN) aufweist, wobei N eine Ganzzahl ist, die mindestens gleich 3 ist, wobei das Verfahren ein Messen (E3) von N gegenwärtigen Empfangsleistungen (PC1 bis PCN) in einem der Elemente, die durch die mobile Station (SM) und sämtliche N Zugriffspunkte gebildet sind, für jeweils vorbestimmte Sendeleistungen von dem anderen der Elemente aus aufweist, **dadurch gekennzeichnet, dass** es die folgenden Schritte aufweist:
für jede räumliche Zone (Zq), im Voraus Messen (E1) von Bezugsempfangsleistungen an Enden von Segmenten (Sq, APn), die jeweils durch einen von kennzeichnenden Punkten der räumlichen Zone (Zq) und einen der Zugriffspunkte für die vorbestimmten Sendeleistungen an den anderen Enden der Segmente gebildet sind, Vergleichen der an den Enden der Segmente (Sq, APn) gemessenen Bezugsempfangsleistungen zum Ableiten der Mindest-und Höchstbezugsempfangsleistungen (PRlqm, PRlqM bis PRNqm, PRNqM), die jeweils den Zugriffspunkten und der räumlichen Zone zugehörig sind, und Bestimmen (E2) einer Hyperleistungszone (HZq) in einem Hyperraum mit N Koordinaten, die jeweils den Empfangsleistungen der N Zugriffspunkte (AP1 bis APN) zugehörig sind, wobei die Hyperzone (HZq) Koordinaten aufweist, die durch die Mindest- und Höchstbezugsempfangsleistungen (PRlqm, PRlqM bis PRNqm, PRNqM) begrenzt sind, und
nach dem Messen der N gegenwärtigen Empfangsleistungen, Orten (E4) der mobilen Station (SM) in einer der räumlichen Zonen, wenn ein Hyperpunkt (HP), der als Koordinaten im Hyperraum die N gegenwärtigen Empfangsleistungen aufweist, zur für die räumliche Zone bestimmten Hyperzone gehört.

2. Verfahren nach Anspruch 1, wobei das Orten (E4) der mobilen Station (SM) mit einem Suchen (E41) des Hyperpunkts (HP) in einer ersten Hyperzone beginnt, die der räumlichen Zone entspricht, in der die mobile Station sich vor dem Orten befand, dann (E42) in den Hyperzonen, die den räumlichen Zonen entsprechen, die mit der vorhergehenden räumlichen Zone in Verbindung stehen, und schließlich (E43) in den übrigen Hyperzonen.

3. Verfahren nach Anspruch 1 oder 2, wobei, wenn der Hyperpunkt (HP), der als Koordinaten die N gegenwärtigen Empfangsleistungen (PC1 bis PCN) aufweist, zu mehreren Hyperzonen gehört (E46), der Hyperpunkt als zu der Hyperzone gehörend betrachtet wird, die am nächsten am Hyperpunkt (HP) liegt.

4. Verfahren nach einem der Ansprüche 1 bis 3, das, wenn der Hyperpunkt (HP), der als Koordinaten die N gegenwärtigen Empfangsleistungen (PC1 bis PCN) aufweist, zu keiner Hyperzone (HZ1 bis HZQ) gehört (E47), eine Berechnung der Entfernung des Hyperpunkts (HP) zu jeder der Hyperzonen (HZ1 bis HZQ) im Hyperraum und eine Addition einer vorbestimmten Konstanten aufweist, wenn die Hyperzone weder die ehemalige Hyperzone, die der vorhergehenden Ortungszone entspricht, noch eine Hyperzone ist, die einer der räumlichen Zonen entspricht, die benachbart waren und mit der vorhergehenden Ortungszone in Verbindung standen, und eine Bestimmung einer neuen Ortungszone aufweist, für die die Summe der Entfernung von der entsprechenden Hyperzone zum Hyperpunkt (HP) plus die vorbestimmte Konstante minimal ist.

5. Verfahren nach einem der Ansprüche 1 bis 4, wobei nach jedem Messen (E3) der gegenwärtigen Empfangsleistungen jede gegenwärtige Empfangsleistung (PC1 bis PCN) über mehrere vorhergehende gegenwärtige Empfangsleistungen als ein Empfangsleistungsmittel gemittelt wird, das eine Koordinate des Hyperpunkts (HP) bildet.

6. Verfahren nach einem der Ansprüche 1 bis 5, wobei, wenn die Anzahl der gegenwärtigen Empfangsleistungen, die größer als eine vorbestimmte Mindestempfangsleistungsschwelle sind, kleiner als drei ist, die gegenwärtigen Empfangsleistungen (PC1 bis PCN) durch Empfangsleistungen ergänzt werden, die vorhergehend in mindestens einem Messschritt (E3) gemessen wurden und die den Zugriffspunkten (AP) zugehörig sind, die gegenwärtigen Empfangsleistungen entsprechen, die niedriger als die Mindestempfangsleistungsschwelle sind.

7. Verfahren nach einem der Ansprüche 1 bis 6, das ein Erhöhen (E11) der Bezugsempfangsleistungen auf einen willkürlichen Wert für den den im Mittel höchsten Empfangsleistungen zugehörigen Zugriffspunkt und ein Korrigieren (E11) der Bezugsempfangsleistungen aufweist, die jedem kennzeichnenden Punkt jeder räumlichen Zone zugehörig sind, indem derselbe Versatz auf sie angewandt wird wie auf die Höchstempfangsleistung, um im Hyperraum in Abhängigkeit von den korrigierten Bezugsempfangsleistungen die Hyperzonen (HZ1 bis HZQ) zu bestimmen (E2), die den räumlichen Zonen zugehörig sind.

8. Verfahren nach einem der Ansprüche 1 bis 7, das ein Vergleichen (E31) der gegenwärtigen Empfangsleistungen (PC1 bis PCN) mit einer Höchstempfangsleistungsschwelle aufweist, um die mobile Station in einer räumlichen Zone (Z1 bis ZQ) in der unmittelbaren Nähe eines Zugriffspunkts zu orten, für den die gegenwärtige Empfangsleistung höher als die Höchstempfangsleistungsschwelle ist.

9. Verfahren nach Anspruch 8, das ein Ersetzen (E32) der Mindestbezugsempfangsleistungen für die räumliche Zone, in der die mobile Station geortet wird, und für die Zugriffspunkte, die sich vom Zugriffspunkt unterscheiden, für den die gegenwärtige Empfangsleistung höher als die Höchstempfangsleistungsschwelle ist, durch jeweils die gegenwärtigen Empfangsleistungen für die anderen Zugriffspunkte aufweist.

10. Verfahren nach Anspruch 8 oder 9, das ein Bewerten (E32) eines mittleren Versatzes (OS) zwischen einerseits den Mindestbezugsempfangsleistungen für die räumliche Zone, in der sich die mobile Station befindet, und für die Zugriffspunkte, die sich vom Zugriffspunkt unterscheiden, für den die gegenwärtige Empfangsleistung höher ist als die Höchstleistungsschwelle, und andererseits den gegenwärtigen Empfangsleistungen für die anderen Zugriffspunkte und ein Anwenden (E33, E34) eines Rückpropagierungsalgorithmus aufweist, damit die gegenwärtige gemessene Empfangsleistung, die einen gegebenen Zugriffspunkt (APn) betrifft, in Abhängigkeit vom mittleren Versatz für den gegebenen Zugriffspunkt korrigiert wird.

11. Verfahren nach einem der Ansprüche 1 bis 10, wobei ein Feuchtefühler, der in den räumlichen Zonen (Z1 bis ZQ) angeordnet ist, in Abhängigkeit von einem Feuchtigkeitsgrad eine von vorhergehend für verschiedene Feuchtigkeitsgrade aufgebauten (E1) Mindest- und Höchstbezugsleistungstabellen (PRlqm, PRlqM bis PRNqm, PRNqM) auswählt, derart, dass die Hyperzonen (HZ1 bis HZQ) in Abhängigkeit von der ausgewählten Tabelle bestimmt (E2) werden.

12. Verfahren nach einem der Ansprüche 1 bis 11, wobei das Element (SM oder AP1 bis APN), das die gegenwärtigen Empfangsleistungen (PC1 bis PCN) misst, periodisch die gegenwärtigen Empfangsleistungen an ein zentralisiertes Mittel (SL) übermittelt, das mit den Zugriffspunkten (AP1 bis APN) verbunden ist und die mobile Station (SM) in einer der räumlichen Zonen ortet (E4).

13. Verfahren nach einem der Ansprüche 1 bis 12, das an jedem Zugriffspunkt (AP1 bis APN) eine Messung von zweiten Bezugsempfangsleistungen aufweist, die von den anderen Zugriffspunkten stammen, wodurch erste, mittels einer mobilen Station gemessene Bezugsempfangsleistungen ergänzt werden, um Änderungen zwischen den Zugriffspunkten zu bestimmen und die gemessenen Bezugsleistungen zu korrigieren.

14. Server (SL) zum Orten einer Mobilstation (SM) in einem WLAN, auf das in räumlichen Zonen (Z1 bis ZQ) zugegriffen werden kann und das N Zugriffspunkte (AP1 bis APN) aufweist, wobei N eine Ganzzahl ist, die mindestens gleich 3 ist, wobei der Server N gegenwärtige Empfangsleistungen (PC1 bis PCN) empfängt, die in einem der Elemente, die durch die mobile Station (SM) und sämtliche der N Zugriffspunkte gebildet werden, für jeweils vorbestimmte Sendeleistungen von dem anderen der Elemente aus gemessen werden,
**dadurch gekennzeichnet, dass** im Voraus für jede räumliche Zone (Zq) nach einer Messung (E1) von Bezugsempfangsleistungen an Enden von Segmenten (Sq, APn), die jeweils durch einen von kennzeichnenden Punkten der räumlichen Zone (Zq) und einen der Zugriffspunkte für die vorbestimmten Sendeleistungen an den anderen Enden der Segmente gebildet sind, der Server die an den Enden der Segmente (Sq, APn) gemessenen Bezugsempfangsleistungen vergleicht, um die Mindest- und Höchstbezugsempfangsleistungen (PR1qm, PR1qM bis PRNqm, PRNqM) abzuleiten, die jeweils den Zugriffspunkten und der räumlichen Zone zugehörig sind, und eine Leistungshyperzone (HZq) in einem Hyperraum mit N Koordinaten bestimmt, die jeweils den Empfangsleistungen der N Zugriffspunkte (AP1 bis APN) zugehörig sind, wobei die Hyperzone (HZq) Koordinaten aufweist, die durch die Mindest- und
Höchstbezugsempfangsleistungen (PRlqm, PRlqM bis PRNqm, PRNqM) begrenzt sind, und
nach der Messung der N gegenwärtigen Empfangsleistungen der Server die mobile Station (SM) in einer der räumlichen Zonen ortet, wenn ein Hyperpunkt (HP), der als Koordinaten im Hyperraum die N gegenwärtigen Empfangsleistungen aufweist, zur für die räumliche Zone bestimmten Hyperzone gehört.

15. Computerprogramm, das geeignet ist, in einem Server (SL) zum Orten einer mobilen Station (SM) in einem WLAN durchgeführt zu werden, auf das in räumlichen Zonen (Z1 bis ZQ) zugegriffen werden kann und das N Zugriffspunkte (AP1 bis APN) aufweist, wobei N eine Ganzzahl ist, die mindestens gleich 3 ist, wobei der Server N gegenwärtige Empfangsleistungen (PC1 bis PCN) empfängt, die in einem der Elemente, die durch die mobile Station (SM) und sämtliche der N Zugriffspunkte gebildet werden, für jeweils vorbestimmte Sendeleistungen von dem anderen der Elemente aus gemessen werden, wobei das Programm Befehle aufweist, die, wenn das Programm in den Server geladen und darin ausgeführt wird, die folgenden Schritte ausführen:
im Voraus für jede räumliche Zone (Zq) nach einer Messung (E1) von Bezugsempfangsleistungen an Enden von Segmenten (Sq, APn), die jeweils durch einen von kennzeichnenden Punkten der räumlichen Zone (Zq) und einen der Zugriffspunkte für die vorbestimmten Sendeleistungen an den anderen Enden der Segmente gebildet sind, Vergleichen der an den Enden der Segmente (Sq, APn) gemessenen Bezugsempfangsleistungen, um die Mindest- und Höchstbezugsempfangsleistungen (PR1qm, PR1qM bis PRNqm, PRNqM) abzuleiten, die jeweils den Zugriffspunkten und der räumlichen Zone zugehörig sind, und Bestimmen (E2) einer Leistungshyperzone (HZq) in einem Hyperraum mit N Koordinaten, die jeweils den Empfangsleistungen der N Zugriffspunkte (AP1 bis APN) zugehörig sind, wobei die Hyperzone (HZq) Koordinaten aufweist, die durch die Mindest- und Höchstbezugsempfangsleistungen (PRlqm, PRlqM bis PRNqm, PRNqM) begrenzt sind, und
nach der Messung der N gegenwärtigen Empfangsleistungen, Orten (E4) der mobilen Station (SM) in einer der räumlichen Zonen, wenn ein Hyperpunkt (HP), der als Koordinaten im Hyperraum die N gegenwärtigen Empfangsleistungen aufweist, zur für die räumliche Zone bestimmten Hyperzone gehört.
